# EUROPEAN PATENT SPECIFICATION

(11) **EP 0 464 129 B1**
(45) Date of publication and mention of the grant of the patent: **07.06.1995**
(21) Application number: 90905719.2
(22) Date of filing: 21.03.1990
(51) Int. Cl.: B25J 9/10

(54) **A TOOL GUIDE ARRANGEMENT**
WERKZEUGFÜHRUNGSEINRICHTUNG
AGENCEMENT DE GUIDAGE D'OUTIL

(30) Priority: 22.03.1989 SE 8901019
(43) Date of publication of application: 08.01.1992
(73) Proprietor: KLINTBERG, Niclas, S-151 59 Södertälje (SE)
(72) Inventor: KLINTBERG, Niclas, S-151 59 Södertälje (SE)
(74) Representative: Lindblom, Erik J.
(86) International application number: SE9000183
(87) International publication number: WO9011165

(56) References cited:
- DE-A- 3 308 474

## Description

The present invention relates to an arrangement by means of which a tool or like device can be guided into different positions as stated in the preamble of claim 1.

It will be understood that the inventive principle can be applied with "horizontal" pivot axles deviating from a horizontal line.

It is therefore important for the purpose of applying the invention in practice and for interpreting the following Claims that such terms as "horizontal" and "vertical" shall only be interpreted as references and that these terms can signify other orientations than those defined, without departing from that which is peculiar to the invention.

An arrangement of the aforedescribed kind can be considered to be known from what is described and illustrated in the US-A-4,299,533, which illustrates a manipulator which is intended for moving material to one of several different locations along a line projected from the arms onto a first plane.

In this instance, movement is effected in a straight line along a plane to one of several available positions on the line.

The EP-A-0 076 947 teaches a device, a so-called robot, which is intended for moving an object and in which the movement path and the position may be any selected path and position within a hemisphere contingent on the length of one arm, this being effected by pivotally connecting a single robot arm or two mutually-coupled arms to a support.

A similar arrangement can be considered to be previously known from the US-A-4 398 863, which also describes the possibility of pivoting an arm about support.

Finally, DE-A1-3 308 474, which describes the closest prior art, teaches a robot system comprising an arrangement which is pivotal about a first vertical axle.

The present invention can be considered a further development of the subject matter of the last mentioned publication.

When considering the present standpoint of techniques, as described in the aforegoing, it will be seen that a qualified technical problem, particularly with respect to the application mentioned in the introduction, is one of providing conditions, with the aid of simple means, such that the tool-attachment and the tool will obtain one and the same orientation irrespective of the manner in which one end of the first arm is caused to rotate in relation to a baseplate.

It will also be seen that a technical problem is one of being able to employ such measures, with the aid of simple means, that when the arm is rotatably arranged relative to a baseplate in a first direction, the tool-attachment will rotate to a corresponding degree in an opposite direction.

It will also be seen that a technical problem is one of providing circumstances such that a tool fixedly mounted in the tool-attachment and positioned obliquely in relation thereto will maintain its oblique setting irrespective of the position of the tool-attachment.

It will also be seen that a technical problem is one of providing, in connection with a vertical pivot axle, a separate gear-wheel arrangement comprising three mutually co-acting gears having predetermined relationships between pivotal directions, so as thereby to create conditions for activating the tool-attachment in the aforesaid manner also in a horizontal plane in response to movement of the arm in said horizontal plane.

It will also be seen that a technical problem is one of providing simple means for rotating the tool-attachment in the aforesaid manner, with the aid of guide rollers and endless belts operative to transmit movement generated from a second and a third gear to an output axle adjacent the tool-attachment.

It will also be seen that a qualified technical problem is one of realizing the significance of allowing the direction for a vertical pivot axle for a sixth gear wheel to be positioned in parallel with a vertical pivot axle of a first gear wheel.

When using pairs of parallel endless belts, it will be seen that a technical problem is one of enabling pairs of guide rollers to readily co-act with one another such as to drive two pairs of endless belts in mutually opposite directions and thereby reduce the effect of lateral forces in operation.

According to the invention, a first, second and third pivot axles shall be orientated horizontally, whereas fourth and fifth pivot axles shall be vertically orientated, in order to afford a simple function of the arrangement thereby.

Finally, it will also be seen that a technical problem is one of realizing that an arrangement successful in solving one or more of the aforesaid technical problems and which offers an alternative use is one in which a first gear can be driven by a motor and in which said driving of said endless belt is transmitted as rotational movement to a sixth gear and its axle and that a cutting or grinding tool can be attached directly to said sixth gear and its axle.

The present invention affords a solution to one or more of the aforesaid technical problems and is based on an arrangement stated in the preamble of claim 1.

In accordance with the present invention, it is proposed the features stated in claim 1. Further embodiments within the present invention are stated in the subclaims.

Those advantages primarily afforded by an arrangement according to the present invention reside in the possibility of moving selectively a tool-attachment, adapted to a tool, along a plane while maintaining a predetermined orientation of the tool-attachment and within a radius determined by the total length of two arms. Because the tool-attachment is secured in the described manner, a tool fitted in said attachment will constantly take a position and alignment contingent on said attachment.

At the same time as it is found possible, with the aid of a motor on one end of a first arm, to impart to a pin co-acting with the tool-attachment a corresponding rotational speed and therewith enable a grinding or cutting tool to be mounted directly onto said axle.

### BRIEF DESCRIPTION OF THE DRAWINGS

An embodiment at present preferred and having features significant to the present invention will now be described in more detail with reference to the accompanying drawings, in which;
Figure 1 is a simplified, perspective view of an arrangement with the tool-attachment in a first position, and also illustrates the orientation of the tool-attachment when said attachment is moved by the arms to an illustrated position located on one side of a line projected from the arms onto the plane;
Figure 2 is a side view which illustrates the operation of the arrangement in a highly simplified fashion; and
Figure 3 illustrates the arrangement of Figure 2 in horizontal projection.

### DESCRIPTION OF EMBODIMENTS AT PRESENT PREFERRED

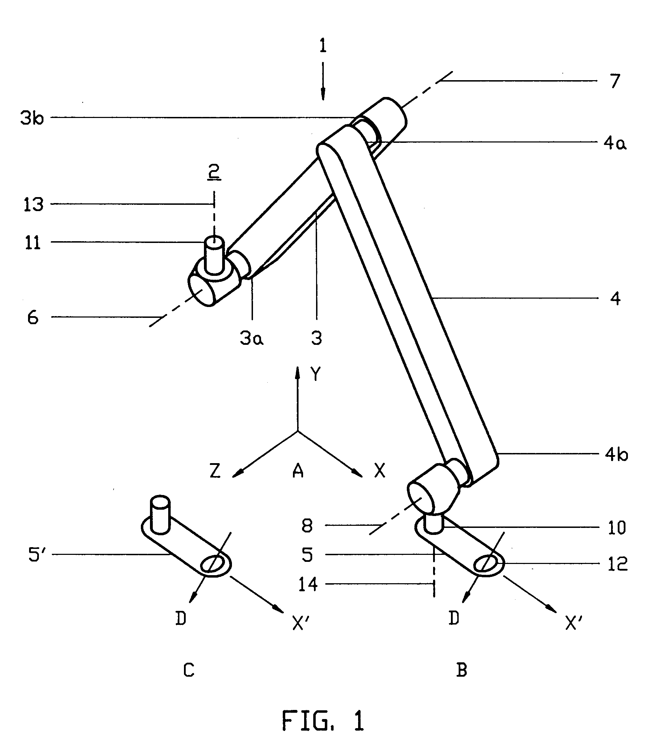

Figure 1 is a simplified illustration of an arrangement by means of which a tool or the like can be guided to different positions pertinent to a first plane "A", defined by "x" and "z"-coordinates, said arrangement 1 including a support 2, a first arm 3, a second arm 4, and a tool-attachment 5 adapted to the tool concerned.

One end 3a of the first arm 3 is pivotally connected to the support 2 via a first horizontal pivot axle 6, one end 4a of the second arm 4 is pivotally connected to the other end 3b of the first arm via a second horizontal pivot axle 7, whereas the other end 4b of said second arm 4 is pivotally connected to the tool-attachment 5 via a third horizontal pivot axle 8, and endless belts or the like are arranged to pass over guide rollers co-acting with respective pivot axles such that when the tool-attachment 5 is moved along a line "x" projected from the arms 3, 4 onto the plane "A", the tool-attachment 5 will take one and the same orientation.

In Figure 1, the "compass direction" for the tool-attachment 5 has been identified by the reference sign "x'".

It should be noted here that the tool-attachment 5 co-acts with a vertical axle 10 and that one end 3a of the arm 3 co-acts with the support 2 via a vertical axle 11.

The tool-attachment 5 is provided with a symbolic recess 12 intended to function as a tool holder, e.g. a drilling machine, in which case the tool-attachment 5 shall then take a position above the plane "A".

The tool-attachment 5 and its hole 12 can also be considered to represent marking equipment intended for marking predetermined positions in the plane "A" (x-z-plane) or any other plane.

It should be noted that a tool secured to the attachment 5 can be alloted any desired direction "D". This direction will be the same, irrespective of the position of tee attachment 5 along the plane "A".

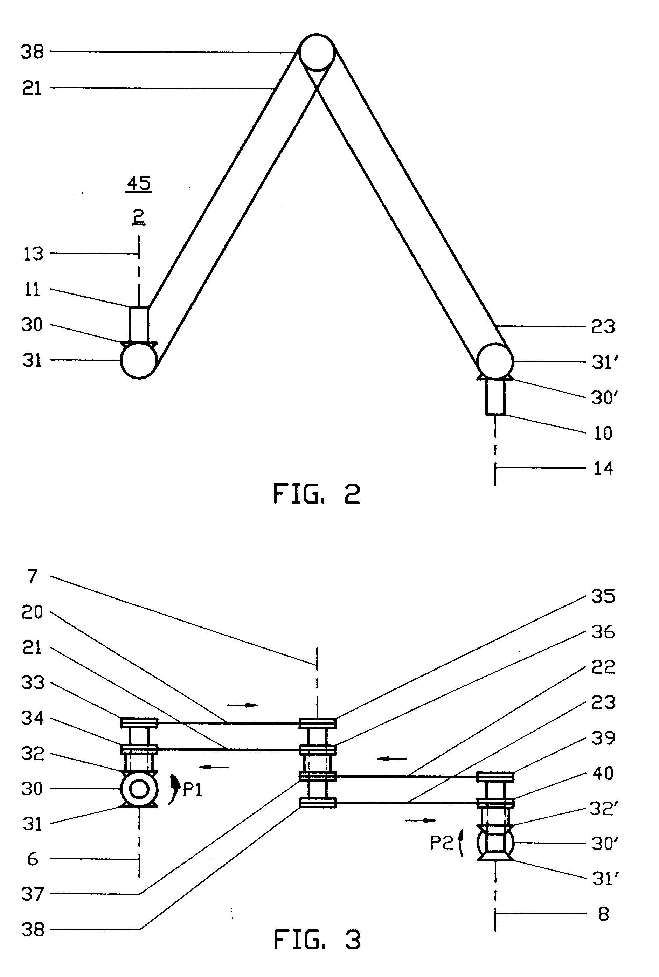

As will be seen from Figures 2 and 3, the arm 3 is pivotally mounted in relation to a baseplate 12 around a fourth vertical pivot axle 13 which forms a right angle with the first pivot axle 6.

The tool-attachment 5 is arranged to rotate relative to a fifth vertical pivot axle 14 forming a right angle with the third pivot axle 8, to a corresponding degree and in an opposite direction.

If it is assumed that the tool-attachment 5 is connected to the axle 10 and that the tool-attachment is moved to the position 5' illustrated in Figure 1, with the aid of the arms 3, 4, the pivot axle 6 will be rotated by the arms 3, 4 in relation to the pivot axle 13 in the manner illustrated by the arrow "P1", thereby meaning that respective endless belts 20, 21, 22, 23 will move in the arrowed directions, which in turn means that the tool-attachment 5 will be moved to the right in Figure 1 towards the position 5' with subsequent rotation in the direction of the arrow "P2" and therewith orientation of the tool-attachment will be one and the same (X') during the whole of the movement from the position "B" to the position "C" in Figure 1.

The fourth pivot axle 13 extends vertically and carries a first gear wheel 30 which, when the tool-attachment 5 is displaced and rotated in a first direction, say from position "B" to position "C" in Figure 1, is operative to drive a second gear wheel 31 in one direction and a third gear wheel 32 in an opposite direction.

Each of the second 31 and the third 32 gear wheel co-acts with a respective guide roller, a first guide roller 33 and a second guide roller 34, each of which co-acts, via a respective endless belt 20, 21, with third and fourth guide rollers, reference 35 and 36, related to said second pivot axle 7, which is connected to fifth and sixth guide rollers 37, 38, and also related to said second pivot axle 7, wherein said fifth and sixth guide rollers co-act, via a respective endless belt 22, 23, with seventh and eighth guide rollers, reference 39 and 40, co-acting with fourth and fifth gear wheels 31', 32', which are in engagement with a sixth gear wheel 30'.

It will be understood that the gear wheel arrangement is principally the same with same diameter and tooth pitch.

The pivot axle of the first gear wheel 30 extends parallel with the pivot axle of the sixth gear wheel 30'.

The fourth 36 and the fifth 37 guide roller are both positioned adjacent one another and are mutually connected so as to be rotationally rigid.

Each of the endless belts of the illustrated embodiment comprises lag-free movement transmissions, such as a toothed belt, and each of the guide rollers has a peripheral surface in-which recesses corresponding to the projections of the tooth belts are provided. This feature is not shown for reasons of simplification. It will also be understood that other belt configurations can be used.

It is also proposed that first, second and third pivot axles 6, 7, 8 are positioned horizontally, whereas the fourth and fifth pivot axles 13, 14 are vertically positioned.

It also lies within the scope of the invention to drive the first gear wheel 30 and the axle 11 by means of a motor, referenced solely by the numeral 45 in Figure 2, in a known manner so as to provide a drive, via said endless belt 20, 21, 22, 23, for transmission of rotary movement to the sixth gear wheel 30' and its axle 10.

The arrangement of pairs of endless belt 20, 21 and 22, 23 means that the forces will be counter-directional and will not influence the mutual position of the arms 3, 4.

In such cases, it is proposed that a cutting or grinding tool is attached to the axle 10 and the sixth gear wheel 30', in which embodiment the tool-attachment 5 is omitted.

It shall also be noted that the guide rollers take a predetermined distance from one another via support arms, not shown in the Figure, or with the aid of the outer casing, illustrated in Figure 1, for the first arm 3 and the second arm 4.

In accordance with the invention, the tool-attachment may have the form of a ball-fastener which can then align the tool in a desired straight or oblique position and lock the tool in one such position.

It is also possible to compensate for the intrinsic weight of the arms with the aid of springs. It is also possible to take measures which will enable lateral movement to take place with the same resistance as an arm-flexing movement.

It will be understood that the invention is not restricted to the aforedescribed exemplifying embodiment and that modifications can be made within the scope of the inventive concept defined in the following Claims.

## Claims

1. An arrangement (1) for enabling a tool or the like to be guided into different positions pertinent to a first plane (A), said arrangement (1) including a support (2), a first arm (3), a second arm (4) and a tool-attachment (5) adapted to the tool, and in which arrangement one end (3a) of the first arm (3) is pivotally connected to the support (2) via a first pivot axle (6), one end (4a) of said second arm (4) is pivotally connected to the other end (3b) of said first arm (3) via a second pivot axle (7), whereas the other end (4b) of said second arm (4) is pivotally connected to said tool-attachment (5) via a third pivot axle (8), and in which arrangement lag-free movement transmissions, such as endless belts, are arranged to pass over guide rollers co-acting with respective pivot axles in a manner such that when the tool-attachment (5) is moved along a line (X) projected from the arms (3, 4) onto the plane (A), said tool-attachment will take one and the same orientation, and in which the arm (3) is pivotally mounted relative to a baseplate via a fourth pivot axle (13) which forms a right angle with said first pivot axle (6), whereas the tool-attachment (5) is arranged to rotate relative to a fifth pivot axle (14) forming a right angle with said third pivot axle (8) to a corresponding extent and in an opposite direction, **characterized** in that the fourth pivot axle (13) co-acts with a first gear wheel (30) which, when the tool-attachment (5) is displaced and rotated in a first direction (from B and C), is operative to drive a second gear wheel (31) in one direction and a third gear wheel (32) in an opposite direction, in that the second (31) and third (32) gear wheels each co-act with a respective guide roller (33, 34), which co-acts via respective lag-free transmission (20, 21) with third (35) and fourth (36) guide rollers related to said second pivot axle (7), which is connected to fifth (37) and sixth (38) guide rollers and related to said second pivot axle (7); and in that said fifth (37) and sixth (38) guide rollers, via respective lag-free transmission, (22, 23) co-act with seventh (39) and eighth (40) guide rollers co-acting with fourth (31') and fifth (32') gear wheels which engage a sixth gear wheel (30').

2. An arrangement according to Claim 1, **characterized** in that the pivot axle of the first gear wheel (30) extends parallel with the pivot axle (14) of the sixth gear wheel (30').

3. An arrangement according to Claim 1, **characterized** in that the fourth (36) and fifth (37) guide rollers are positioned adjacent one another and are connected together.

4. An arrangement according to Claim 1, **characterized** in that each of endless belts (20, 21, 22, 23) comprises a toothed belt and each of the guide rollers has a peripheral surface provided with recesses, which correspond to the configuration of the toothed belt.

5. An arrangement according to Claim 1, **characterized** in that the first (6), second (7) and third (8) pivot axles-are parallel whereas the fourth (13) and fifth (14) pivot axles extend vertically and in parallel relationship.

6. An arrangement according to Claim 1, **characterized** in that the first gear wheel (30) is driven by a motor (45); and in that said driving is transmitted, via said endless belts, as a rotary-movement to the sixth gear wheel (30') and its axle (14).

7. An arrangement according to Claim 6, **characterized** in that a cutting tool is attached to said sixth gear wheel (30') and its axle.

## Patentansprüche

1. Anordnung (1), die die Führung eines Werkzeugs oder dergleichen in verschiedene Positionen im Verhältnis zu einer ersten Ebene (A) ermöglicht, wobei jene Anordnung (1) eine Stütze (2), einen ersten Arm (3), einen zweiten Arm (4) und eine für das Werkzeug geeignete Werkzeugbefestigung (5) enthält, und bei welcher Anordnung ein Ende (3a) des ersten Arm (3) über eine erste Schwenkachse (6) schwenkbar mit der Stütze (2) verbunden ist und ein Ende (4a) des zweiten Arms (4) über eine zweite Schwenkachse (7) schwenkbar mit dem anderen Ende (3b) des ersten Arms (3) verbunden ist, wohingegen das andere Ende (4b) des zweiten Arms (4) über eine dritte Schwenkachse (8) schwenkbar mit der Werkzeugbefestigung (5) verbunden ist, und bei welcher Anordnung verzögerungsfreie Bewegungsübertragungsorgane wie z.B. Endlosriemen so angeordnet sind, daß sie über Führungsrollen laufen, die mit jeweiligen Schwenkachsen so zusammenwirken, daß die Werkzeugbefestigung (5) ein und dieselbe Ausrichtung annimmt, wenn sie entlang einer von den Armen (3, 4) auf die Ebene (A) projizierte Linie (X) bewegt wird, und wobei der Arm (3) über eine vierte Schwenkachse (13), die mit der ersten Schwenkachse (6) einen rechten Winkel bildet, gegenüber einer Grundplatte schwenkbar montiert ist, wohingegen die Werkzeugbefestigung (5) so angeordnet ist, daß sie sich gegenüber einer fünften Schwenkachse (14), die mit der dritten Schwenkachse (8) zu einem entsprechenden Ausmaß und in entgegengesetzter Richtung einen rechten Winkel bildet, dreht, dadurch gekennzeichnet, daß die vierte Schwenkachse (13) mit einem ersten Zahnrad (30) zusammenwirkt, das ein zweites Zahnrad (31) in einer Richtung und ein drittes Zahnrad (32) in entgegengesetzter Richtung antreibt, wenn die Werkzeugbefestigung (5) verschoben ist und in einer ersten Richtung (von B und C) gedreht wird, daß das zweite (31) und dritte (32) Zahnrad jeweils mit einer entsprechenden Führungsrolle (33, 34) zusammenwirkt, die über ein jeweiliges verzögerungsfreies Übertragungsorgan (20, 21) mit einer dritten (35) und vierten (36) mit der zweiten Schwenkachse (7) in Verbindung stehenden Führungsrolle zusammenwirkt, wobei die zweite Schwenkachse (7) mit einer fünften (37) und sechsten (38) Führungsrolle verbunden ist; und daß die fünfte (37) und sechste (38) Führungsrolle über jeweilige verzögerungsfreie Übertragungsorgane (22, 23) mit einer siebten (39) und achten (40) Führungsrolle zusammenwirken, die mit einem vierten (31') und fünften (32') Zahnrad, die ein sechstes Zahnrad (30') in Eingriff nehmen, zusammenwirken.

2. Anordnung nach Anspruch 1, dadurch gekennzeichnet, daß sich die Schwenkachse des ersten Zahnrads (30) parallel zur Schwenkachse (14) des sechsten Zahnrads (30') erstreckt.

3. Anordnung nach Anspruch 1, dadurch gekennzeichnet, daß die vierte (36) und fünfte (37) Führungsrolle nebeneinander positioniert und miteinander verbunden sind.

4. Anordnung nach Anspruch 1, dadurch gekennzeichnet, daß jeder der Endlosriemen (20, 21, 22, 23) einen Zahnriemen umfaßt und jede der Führungsrollen eine mit Ausnehmungen versehene Umfangsfläche aufweist, die der Konfiguration des Zahnriemens entsprechen.

5. Anordnung nach Anspruch 1, dadurch gekennzeichnet, daß die erste (6), zweite (7) und dritte (8) Schwenkachse parallel sind, wohingegen sich die vierte (13) und fünfte (14) Schwenkachse vertikal und parallel erstrecken.

6. Anordnung nach Anspruch 1, dadurch gekennzeichnet, daß das erste Zahnrad (30) von einem Motor (45) angetrieben wird und das dieser Antrieb über die Endlosriemen auf das sechste Zahnrad (30') und seine Achse (14) als Drehbewegung übertragen wird.

7. Anordnung nach Anspruch 6, dadurch gekennzeichnet, daß ein Schneidwerkzeug an dem sechsten Zahnrad (30') und seiner Achse befestigt ist.

## Revendications

1. Agencement (1) pour permettre à un outil ou similaire d'être guidé dans des positions différentes se rapportant à un premier plan (A), ledit agencement (1) incluant un appui (2), un premier bras (3), un deuxième bras (4) et un accessoire pour outil (5) adapté à l'outil, et dans lequel agencement une extrémité (3a) du premier bras (3) est reliée à l'appui (2) par un assemblage à pivot par l'intermédiaire d'un premier axe à pivot (6), une extrémité (4a) dudit deuxième bras (4) est reliée par un assemblage à pivot à l'autre extrémité (3b) dudit premier bras (3) par l'intermédiaire d'un deuxième axe à pivot (7), alors que l'autre extrémité (4b) dudit deuxième bras (4) est reliée par un assemblage à pivot audit accessoire pour outil (5) par l'intermédiaire d'un troisième axe à pivot (8), et dans lequel agencement des transmissions de mouvement sans décalage, telles que des courroies sans fin, sont agencées pour passer sur des rouleaux de guidage agissant en commun avec les axes à pivot respectifs d'une manière telle que lorsque l'accessoire pour outil (5) est déplacé le long d'une ligne (X) projetée depuis les bras (3, 4) sur le plan (A), ledit accessoire pour outil prendra une même orientation, et dans lequel le bras (3) est monté par un assemblage à pivot par rapport à une embase par l'intermédiaire d'un quatrième axe à pivot (13) qui forme un angle droit avec ledit premier axe à pivot (6), alors que l'accessoire pour outil (5) est agencé pour tourner par rapport à un cinquème axe à pivot (14) formant un angle droit avec ledit troisième axe à pivot (8) jusqu'à un point correspondant et dans une direction opposée, caractérisé en ce que le quatrième axe à pivot (13) agit en commun avec une première roue dentée (30) qui, lorsque l'accessoire pour outil (5) est déplacé et mis en rotation dans une première direction (de B et de C), est opérative pour entraîner une deuxième roue dentée (31) dans une direction et une troisième roue dentée (32) dans une direction opposée, en ce que la deuxième (31) et la troisième (32) roues dentées agissent chacune en commun avec un rouleau de guidage respectif (33, 34), qui agit en commun, par l'intermédiaire d'une transmission sans décalage (20, 21) respective, avec les troisième (35) et quatrième (36) rouleaux de guidage se rapportant audit deuxième axe à pivot (7), qui est relié aux cinquième (37) et sixième (38) rouleaux de guidage et afférent audit deuxième axe à pivot (7); et en ce que lesdits cinquième (37) et sixième (38) rouleaux de guidage, par l'intermédiaire d'une transmission sans décalage (22, 23) respective agissent en commun avec le septième (39) et le huitième (40) rouleaux de guidage agissant en commun avec la quatrième (31') et la cinquième (32') roues dentées qui sont en prise avec une sixième roue dentée (30').

2. Agencement selon la revendication 1, caractérisé en ce que l'axe à pivot de la première roue dentée (30) s'étend parallèllement à l'axe à pivot (14) de la sixième roue dentée (30').

3. Agencement selon la revendication 1, caractérisé en ce que le quatrième (36) et le cinquième (37) rouleaux de guidage sont positionnés côte à côte et sont reliés ensemble.

4. Agencement selon la revendication 1, caractérisé en ce que chacune des courroies sans fin (20, 21, 22, 23) comprend une courroie crantée et chacun des rouleaux de guidage a une surface périphérique équipée d'évidements, qui correspondent à la configuration de la courroie crantée.

5. Agencement selon la revendication 1, caractérisé en ce que les premier (6), deuxième (7) et troisième (8) axes à pivot sont parallèles alors que les quatrième (13) et cinquième (14) axes à pivot s'étendent verticalement et en relation parallèle.

6. Agencement selon la revendication 1, caractérisé en ce que la première roue dentée (30) est entraînée par un moteur (45); et en ce que ledit entraînement est transmis, par l'intermédiaire desdites courroies sans fin, en tant que mouvement rotatif à la sixième roue dentée (30') et son axe (14).

7. Agencement selon la revendication 6, caractérisé en ce qu'un outil de coupe est attaché à ladite sixième roue dentée (30') et son axe.
